# EUROPEAN PATENT APPLICATION

(11) **EP 3 644 296 A1**
(43) Date of publication of application: **29.04.2020**
(21) Application number: 18821247.6
(22) Date of filing: 22.06.2018
(51) Int. Cl.: G08G 1/09, G08G 1/14

(54) **VEHICLE POSITIONING METHOD, APPARATUS AND TERMINAL DEVICE**

(30) Priority: 22.06.2017 CN 201710482282
(71) Applicant: ZTE Corporation, Shenzhen, Guangdong 518057 (CN)
(72) Inventor: HU, Xiaoxin, Shenzhen Guangdong 518057 (CN)
(74) Representative: Hervouet-Malbec, Sylvie
(86) International application number: PCT/CN2018/092462
(87) International publication number: WO 2018/233699

(57) **Abstract**

The present disclosure relates to a method and device for positioning a vehicle and terminal equipment. The method includes: acquiring positioning information sent by at least one peripheral device after receiving a positioning instruction; selecting a peripheral device meeting a preset condition to serve as a positioning reference according to the positioning information; and acquiring positioning information of a location of the vehicle based on a wireless signal relationship between the vehicle and the peripheral device serving as the positioning reference.

## Description

### TECHNICAL FIELD

The present disclosure relates to the field of vehicle positioning, and in particular, to method and device for positioning a vehicle, and terminal equipment.

### BACKGROUND

Indoor positioning refers to implementation of location positioning in an indoor environment, and an indoor location positioning system is formed mainly by adopting various technologies such as wireless communication, base station positioning, inertial navigation positioning, and the like, so as to monitor the position of a person, an object or the like in an indoor space.

In practical applications, the positioning system of the related art is susceptible to environmental factors, and has poor signal stability. In addition, when some positioning techniques are applied to indoor environments, new positioning systems need to be established, and a large amount of underlying hardware is needed, so that the positioning cost is too high.

Therefore, for indoor vehicle positioning, a method that is simple and capable of implementing accurate positioning is required.

### SUMMARY

According to an embodiment of the present disclosure, there is provided a method for positioning a vehicle, including: acquiring positioning information sent by a peripheral device after receiving a positioning instruction; selecting a peripheral device meeting a preset condition to serve as a positioning reference according to the positioning information; and acquiring positioning information of a location of the vehicle according to a wireless signal relationship between the vehicle and the peripheral device serving as the positioning reference.

According to an embodiment of the present disclosure, there is provided a device for positioning a vehicle including: a first acquisition module configured to acquire positioning information sent by a peripheral device after receiving a positioning instruction; a selection module configured to select a peripheral device meeting a preset condition to serve as a positioning reference according to the positioning information; and a second acquisition module configured to acquire positioning information of a location of the vehicle according to a wireless signal relationship between the vehicle and the peripheral device serving as the positioning reference.

According to an embodiment of the present disclosure, there is provided terminal equipment including a memory in which a computer program is stored and a processor, when the computer program is run by the processor, the processor performs the method for positioning a vehicle according to the present disclosure.

According to an embodiment of the present disclosure, there is provided a storage medium having stored thereon a computer program which, when executed by a processor, causes the processor to perform the method for positioning a vehicle according to the present disclosure.

### BRIEF DESCRIPTION OF THE DRAWINGS

The accompanying drawings described herein are used to provide a further understanding of the present disclosure and constitute a part of the disclosure, and exemplary embodiments of the present disclosure and description thereof are used to explain the disclosure and not to improperly limit the present disclosure. In the drawings:
FIG. 1 is a schematic diagram illustrating an environment in which method and device for positioning a vehicle according to an embodiment of the present disclosure are applied;
FIG. 2 is a flowchart of a method for positioning a vehicle according to an embodiment of the present disclosure;
FIG. 3 is a flowchart of a method for positioning a vehicle according to another embodiment of the present disclosure;
FIG. 4 is a block diagram of a device for positioning a vehicle according to an embodiment of the present disclosure;
FIG. 5 is a block diagram of a device for positioning a vehicle according to another embodiment of the present disclosure; and
FIG. 6 is a block diagram of terminal equipment for positioning a vehicle according to an embodiment of the present disclosure.

### DETAILED DESCRIPTION

In order to make the objects, technical solutions and advantages of the present disclosure clearer and more apparent, the present disclosure is described in detail below with reference to the accompanying drawings and embodiments. It should be understood that the specific embodiments described herein merely serve to explain the present disclosure and do not limit the present disclosure.

The commonly used indoor positioning technologies mainly include Global Positioning System (GPS) positioning, Bluetooth positioning, infrared positioning, Wireless Sensor Network (WSN) positioning, Radio Frequency Identification (RFID) positioning, ultra wide band positioning, ultrasonic positioning, and cellular base station positioning.

In practical applications of a positioning system, positioning technologies such as GPS positioning, Bluetooth positioning, infrared positioning, WSN positioning, and RFID positioning are easily affected by environmental factors such as noise signals, temperature and humidity, and other light sources or obstacles when being applied in an indoor environment, and thus have poor signal stability.

In addition, when the positioning technologies such as Bluetooth positioning, infrared positioning, WSN positioning, RFID positioning, ultra-wideband positioning, and ultrasonic wave are applied in an indoor environment, a new positioning system needs to be established, and a large amount of underlying hardware facilities are needed, so that the positioning cost is too high.

Currently, a cellular positioning system based on a base station has the following flow: reporting measurement information by a terminal; calculating by the base station based on the information reported by the terminal and measurement information of the base station; and returning positioning result to the terminal. The cellular positioning based on base stations does not need to establish a new positioning system and has a wide coverage, but when the cellular positioning based on base stations is used, assistance of a positioning network formed by the base stations is required, the time delay is large, and the positioning accuracy is low.

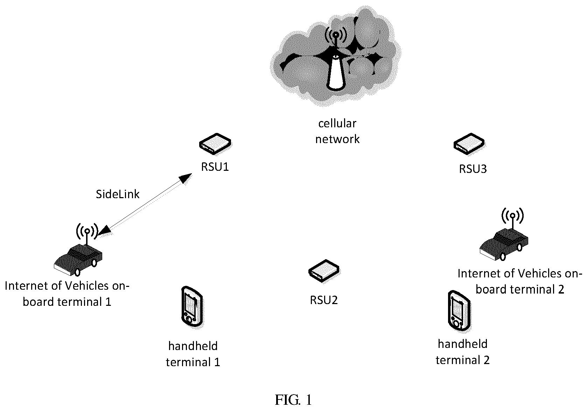

FIG. 1 is a schematic diagram illustrating an environment in which a method and device for positioning a vehicle according to an embodiment of the present disclosure are applied.

FIG. 1 is a schematic diagram showing an environment of vehicle positioning based on Long Term Evolution-Vehicle (LTE-V), which is a protocol specifically for inter-vehicle communication. As shown in FIG. 1, in this environment the followings are included: an Internet of vehicles on-board terminal 1 and an Internet of Vehicles on-board terminal 2 on respective vehicles; a handheld terminal 1 and a handheld terminal 2; fixed devices RSU1 to RSU3 with Internet of Vehicles capability (deployed at parking spaces or at lane sides); and a cellular network for signal transmission. A SideLink (a standard for direct communication between physical layer terminals defined by 36.211 in LTE) connection may be established between an Internet of Vehicles on-board terminal and a fixed device RSU. The number of each type of terminal devices shown in FIG. 1 is only exemplary, and the present disclosure is not limited thereto.

The Internet of Vehicles is a large system network based on an inter-vehicle network, an intra-vehicle network and vehicular mobile Internet and performing wireless communication and information exchange between a vehicle and X (X represents a vehicle, a road, a pedestrian, the Internet, or the like) according to an agreed communication protocol and a data interaction standard. The Internet of Vehicles is an integrated network capable of implementing intelligent traffic management, intelligent dynamic information service and vehicle intelligent control, and is a typical application of the Internet of Things (IoT) technology in the field of traffic systems. In short, the Internet of Vehicles is a network in which vehicles are connected with everything, and interconnection and intercommunication between vehicles (Vehicle to Vehicle, V2V), a vehicle and a road infrastructure (Vehicle to Infrastructure, V2I), a vehicle and pedestrians (Vehicle to Pedestrians, V2P), a vehicle and Cloud (V2C), a vehicle and a network (Vehicle to Network, V2N) and a vehicle and home (Vehicle to Home, V2H) are implemented through interconnection between a Vehicular ad-hoc Network and various heterogeneous networks. The interconnection and intercommunication between vehicles and all things is expressed as V2X (Vehicle to X), where X represents a vehicle, a road, a pedestrian, an internet, etc., or may also be expressed as "Vehicle to Everything".

The V2V communication refers to wireless-based data transmission between vehicles, and position and speed information of a vehicle is sent to another vehicle through a dedicated network. The V2V technology adopts Dedicated Short Range Communication (DSRC). V2V communication needs a wireless network over which vehicles exchange information to tell each other what they are doing. Such information may include speed, position, driving direction, braking, etc. Through V2V, direct communication between terminals is possible without network participation.

The Internet of Vehicles is a key technology for the future intelligent transportation system, and enables vehicles, a vehicle and a base station, as well as base stations to communicate with each other, so that a series of traffic information such as real-time road conditions, road information, pedestrian information and the like can be obtained to improve driving safety, reduce traffic jam, improve traffic efficiency, and provide on-board entertainment information, and the like. A vehicle equipped with an Internet of Vehicles system can automatically select the driving route with the best road condition by analyzing the real-time traffic information, thereby greatly relieving traffic jam. Besides, by using an on-board sensor and a camera system, the surrounding environment can be sensed, and quick adjustment can be made.

The Internet of Vehicles on-board terminal (i.e., terminal equipment with V2X capability on a vehicle) is used by the vehicle to receive location information of external terminal equipment and send the location information of the vehicle.

The Internet of Vehicles fixed device (e.g., Road Side Unit (RSU)) has communication capability. The Internet of Vehicles fixed device can acquire high-accuracy location information of itself, and the location information of the Internet of Vehicles fixed device can be acquired by the Internet of Vehicles fixed device in a preset mode or a network issuing mode. That is to say, the Internet of Vehicles fixed device may acquire accurate position of itself from the network, and may acquire accurate position of itself in other way such as by presetting, can externally broadcast information required for positioning, and communicate with other Internet of Vehicles fixed devices to serve as a candidate location reference.

The RSU is a unit installed on a roadside in an Electronic Toll Collection (ETC) system, and communicates with an On Board Unit (OBU) by using a DSRC technology to realize vehicle identification.

The handheld terminal includes, but is not limited to, a mobile phone, a tablet computer, and other terminal with Internet of Vehicles capability. The handheld terminal may communicate directly with other terminal equipment through a cellular network.

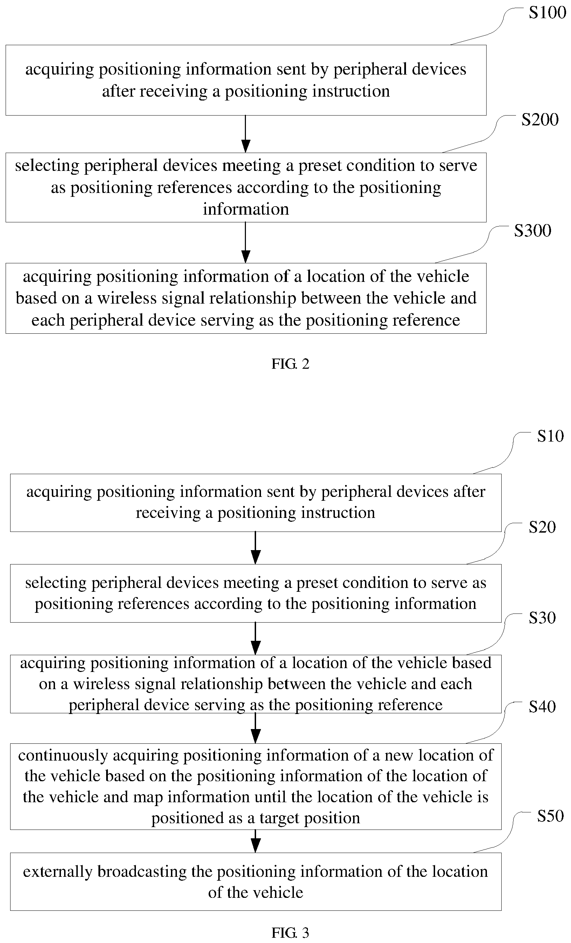

FIG. 2 is a flowchart of a method for positioning a vehicle according to an embodiment of the present disclosure
The method for positioning a vehicle shown in FIG. 2 may be applied in the environment shown in FIG. 1. As shown in FIG. 2, The method for positioning a vehicle according to an embodiment of the present disclosure may include steps S100 to S300.

In step S100, after receiving a positioning instruction, positioning information sent by a peripheral device is acquired.

In an embodiment, step S100 may include acquiring positioning information sent by a peripheral Internet of Vehicles device, that is, upon receipt of the positioning instruction, the positioning information of the peripheral Internet of Vehicles device having the function of sending the positioning information to the vehicle is acquired.

In an embodiment, the Internet of Vehicles devices (hereinafter also referred to as V2X devices) may include an Internet of Vehicles fixed device (e.g., RSU shown in FIG. 1) performing information exchange between a vehicle and the outside and an Internet of Vehicles on-board device of a vehicle whose position has been determined (hereinafter also referred to as V2X on-board device), that is, the Internet of Vehicles devices may include the Internet of Vehicles fixed device and the Internet of Vehicles on-board device whose position has been determined. The V2X device is a device with V2X capability for exchanging information with the outside, and may be a fixed device (e.g., RSU), a V2X on-board device, or the like. With the development of Internet of Vehicles, the number of RSU devices will increase.

The positioning information externally broadcasted by the V2X device may include location information of the V2X device, positioning accuracy of the V2X device, type information of the V2X device, and motion information of the V2X device. The location information of the V2X device may be expressed by longitude, latitude, and altitude. The accuracy represents degree of proximity between an observed value and the real value, is the positioning accuracy, and is the degree of proximity between spatial entity location information (usually coordinates) and its true location. The type information of the V2X device may indicate the type of the V2X device, such as a fixed RSU or a V2X on-board device, etc. The motion information of the V2X device may include state (e.g., a motion state and a static state) of the V2X device, a direction angle of the V2X device, and the like.

The fixed device with V2X capability, such as an RSU, may be deployed at a parking space or a lane side in an indoor parking lot. With the development of the Internet of Vehicles, a large number of V2X devices whose positions are fixed are available in the Internet of Vehicles and may be used as positioning references. As the number of V2X devices increases, the positioning accuracy will increase. In addition, no additional infrastructure needs to be established, thereby saving cost and reducing complexity of the positioning network.

When a vehicle enters a room and positioning is required, the V2X on-board device may search for peripheral V2X devices (including fixed devices and other V2X on-board devices) to acquire positioning information of peripheral V2X devices having a function of sending out positioning information and use the peripheral V2X devices as candidate positioning references.

In step S200, according to the positioning information, a peripheral device meeting a preset condition is selected as a positioning reference, that is, an Internet of Vehicles device that meets the preset condition is selected as a positioning reference.

After the positioning information of a plurality of V2X devices is acquired in step S100, a part of the plurality of V2X devices is selected as a positioning reference according to the acquired positioning information of each V2X device and the preset condition. In order to accurately realize positioning, at least two V2X devices are selected as positioning references. The larger the number of the selected positioning references is, the more accurate the positioning accuracy is. In addition, an appropriate number of positioning references may be selected according to the needs of the algorithm.

In step S300, positioning information of location of the vehicle is acquired based on wireless signal relationship between the vehicle and each peripheral device serving as the positioning reference, that is, the positioning information of the location of the vehicle itself is acquired based on the wireless signal relationship with each V2X device serving as the positioning reference.

The method for acquiring the location of the vehicle itself may employ various algorithms in the related art, including, but not limited to, a triangulation method, a Time of Arrival (TOA) positioning method, or a Time Difference of Arrival (TDOA) positioning method, etc.

The principle of the triangulation method is detecting the orientation of an object using two or more V2X devices at different locations and then determining the location and distance of the object using the principles of trigonometry and geometry. The principle of the TOA positioning method is measuring the signal propagation time to two (or more) V2X devices that serve as the positioning references, so as to obtain estimated values of distances to the two (or more) V2X devices that serve as the positioning references, and drawing a circle by taking each V2X device that serves as a positioning reference as a center and each estimated value of distance corresponding thereto as a radius, where the intersection point of a plurality of circles is the estimated location of the mobile station. The TDOA positioning method is a positioning method using time difference. By measuring the time at which the signal arrives at the monitoring station, the distance of the signal source can be determined. The location of the signal can be determined by using the distance from the signal source to each monitoring station. However, the absolute time is generally difficult to measure, so that by comparing the difference in time when the signal reaches each monitoring station, hyperbolas each with the monitoring station as a focus and the distance difference as a long axis can be obtained, and the intersection point of the hyperbolas is the location of the signal.

In an embodiment, the preset conditions may include at least one of the following conditions: the Internet of Vehicles device is a RSU fixed device; the Internet of Vehicles device is an Internet of Vehicles on-board device; the positioning accuracy of the Internet of Vehicles device reaches a preset accuracy threshold; the vehicle is within the direction angle of the Internet of Vehicles device; and the Internet of Vehicles device is in a static state.

In the embodiment, step S200 may include: taking conditions of the type of the V2X device, whether the positioning accuracy of the V2X device reaches a preset accuracy threshold, the direction angle of the V2X device, whether the V2X on-board device is in a static state, and the like as reference bases, and selecting at least one V2X device as a positioning reference according to different conditions or different combinations of the conditions.

According to embodiments of the present disclosure, a V2X fixed device, for example, may be selected as a positioning reference; a V2X device with the positioning accuracy of less than 0.5 m is used as a positioning reference; a V2X fixed device and a V2X on-board device which have the positioning accuracy of less than 0.5 m and are in a static state are used as positioning references.

FIG. 3 is a flowchart of a method for positioning a vehicle according to another embodiment of the present disclosure.

The method for positioning a vehicle shown in FIG. 3 may be applied in the environment shown in FIG. 1. As shown in FIG. 3, a method for positioning a vehicle according to an embodiment of the present disclosure may include steps S10 to S50. Steps S10 to S30 are the same or substantially the same as steps S100 to S300 shown in FIG. 2, and thus are not repeated herein.

In step S40, positioning information of a new location of the vehicle is continuously acquired based on the positioning information of the location of the vehicle and map information until the location of the vehicle is positioned as the target position, i.e., the positioning process is continued based on the positioning information of the location of the vehicle itself and the map information and the positioning information of the new position is continuously acquired until the destination is reached.

In step S50, the positioning information of the location of the vehicle is externally broadcasted, that is, after the V2X on-board device completes its own positioning, its positioning information can be externally broadcasted to serve as a candidate positioning reference for other vehicles.

After the vehicle calculates its own location, it externally broadcasts its positioning information to be referenced by other vehicles to be positioned. The positioning information externally broadcasted by the V2X on-board device may include location information, positioning accuracy, device type information (i.e., the type is a V2X on-board device), and motion information (motion/static state, direction angle, etc.), and thus may be used as a candidate positioning reference for other V2X on-board devices.

In order to further describe the embodiments of the present disclosure, the above positioning process is described in detail below with specific application examples.

For example, a cellular network is deployed in an indoor parking lot, and the network may be an LTE network or a cellular network of other type. The V2X fixed device obtains its own location information from GPS or the network. A hand-held terminal, a V2X on-board terminal and a RSU in the indoor parking lot can communicate through the network. When the indoor parking lot has no cellular network, the hand-held terminal, the V2X on-board terminal and the RSU can directly perform inter-terminal communication.

It should be noted that the wireless resource allocation process for direct communication between terminals such as the V2X on-board terminal, RSU, handheld terminal, and the like may be implemented through the LTE-V V2V mechanism. Before broadcasting information, the terminal maps the resource pool based on its own location (all optional resource pools are configured in the terminal in advance or acquired through the network). After wireless resources which are determined to be occupied by other terminals are removed, the terminal selects a wireless resource to be used by itself from the remaining available resources according to a certain principle, and transmits data by using the selected wireless resource. All terminals receive broadcast information using a same resource pool.

Referring to FIG. 1, RSU1 and RSU2 may acquire their own location information from a network, determine a wireless resource for their own use in a resource selecting manner, and broadcast their own location information using the selected wireless resource. After the Internet of Vehicles on-board terminal 1 enters the indoor area, an up-level application of the Internet of Vehicles on-board terminal 1 determines that positioning is needed, and the Internet of Vehicles on-board terminal 1 searches for information of a peripheral V2X terminal. After the Internet of Vehicles on-board terminal 1 identifies the positioning information broadcasted by RSU1 and RSU2, RSU1 and RSU2 are both used as candidate positioning references, and finally it is determined that both RSU1 and RSU2 are selected as the positioning references. Subsequently, the Internet of Vehicles on-board terminal 1 performs wireless communication with RSU1 and RSU2, and performs its own -positioning based on the positioning information of RSU1 and RSU2, as well as the wireless signal relationship with RSU1 and RSU2. After the positioning, the Internet of Vehicles on-board terminal 1 may travel to the destination based on its own positioning information and the map information. After the destination is reached, the Internet of Vehicles on-board terminal 1 may externally broadcast its own positioning information to be selected by other devices as a candidate positioning reference.

Thereafter, the Internet of Vehicles on-board terminal 2 enters the indoor area, and requires positioning. The Internet of Vehicles on-board terminal 2 searches for information of a peripheral V2X terminal, and identifies the positioning information broadcasted by RSU1, RSU2, RSU3, and the Internet of Vehicles on-board terminal 1. The Internet of Vehicles -on-board terminal 2 determines to select a V2X device whose type is a fixed device (i.e., RSU1, RSU2, and RSU 3) as a positioning reference. Subsequently, the Internet of Vehicles on-board terminal 2 positions its own location based on the positioning information of RSU1, RSU2, and RSU3, as well as the wireless signal relationship with RSU1, RSU2, and RSU3. After the positioning, the Internet of Vehicles on-board terminal 2 may travel to the destination based on its own positioning information and the map information. After the destination is reached, the Internet of Vehicles on-board terminal 2 may externally broadcast its own positioning information to be selected by other devices as a candidate positioning reference.

The embodiments of the disclosure provide a vehicle indoor positioning method based on the V2V communication function provided by LTE-V and in combination with RSU devices in the Internet of Vehicles. Based on a cellular network, positioning is performed by utilizing communication between a RSU device and a V2X terminal which are deployed in the Internet of Vehicles. Multiple RSUs and V2X on-board devices are used as positioning references, the coverage area is wide and continuous, moreover, a sensor does not need to be additionally arranged, and a prior information bank does not need to be established. The positioning process is mainly based on direct communication between V2X terminals (i.e., V2V communication between V2X devices) instead of communication between a terminal and a network, and uses computing power of multiple terminals for positioning, , and assistance of a positioning network is unnecessary. According to the method for positioning a vehicle disclosed by the embodiments of the disclosure, accurate indoor positioning of vehicles can be realized, the network bandwidth overhead and the operation overhead are reduced, and the positioning cost is reduced.

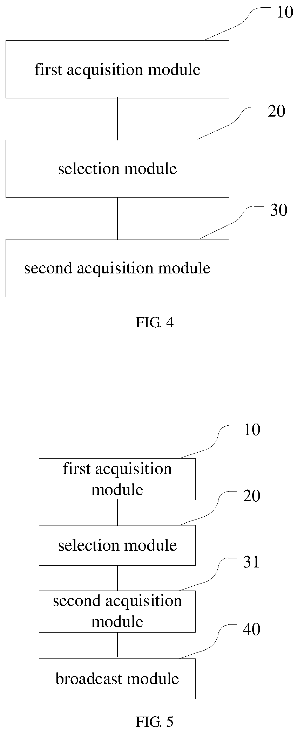

FIG. 4 is a block diagram of a device for positioning a vehicle according to an embodiment of the present disclosure.

The device for positioning a vehicle shown in FIG. 4 may be applied in the environment shown in FIG. 1. As shown in FIG. 4, the device for positioning a vehicle according to an embodiment of the present disclosure may include a first acquisition module 10, a selection module 20, and a second acquisition module 30.

The first acquisition module 10 is configured to acquire positioning information sent by a peripheral device after receiving a positioning instruction.

The selection module 20 is configured to select a peripheral device meeting a preset condition as a positioning reference according to the positioning information.

The second acquisition module 30 is configured to acquire positioning information of a location of the vehicle based on a wireless signal relationship between the vehicle and the peripheral device serving as the positioning reference.

FIG. 5 is a block diagram of a device for positioning a vehicle according to another embodiment of the present disclosure.

The device for positioning a vehicle shown in FIG. 5 may be applied in the environment shown in FIG. 1. As shown in FIG. 5, the device for positioning a vehicle according to an embodiment of the present disclosure may include a first acquisition module 10, a selection module 20, a second acquisition module 31, and a broadcast module 40. The first acquisition module 10 and the selection module 20 are the same as or substantially the same as the first acquisition module 10 and the selection module 20 shown in FIG. 4, respectively, and therefore are not repeatedly described herein.

The second acquisition module 31 may be further configured to continuously obtain positioning information of a new location of the vehicle based on the positioning information of the location of the vehicle and map information until the location of the vehicle is positioned as a target position.

The broadcast module 40 is configured to externally broadcast the positioning information of the location of the vehicle.

In an embodiment, the present disclosure also provides one or more non-transitory computer-readable storage media storing computer-executable instructions that, when executed by one or more processors, can cause the one or more processors to perform the method for positioning a vehicle according to embodiments of the present disclosure.

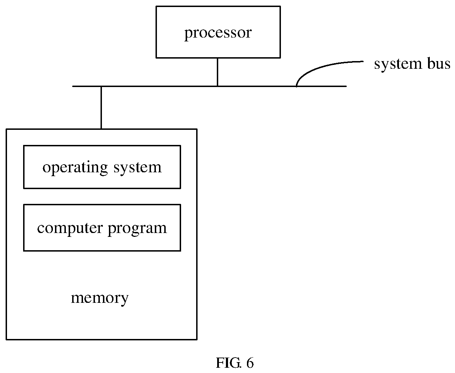

FIG. 6 is a block diagram of terminal equipment for positioning a vehicle according to an embodiment of the present disclosure.

As shown in FIG. 6, in an embodiment, the present disclosure also provides terminal equipment. The terminal equipment may include a memory and a processor. A computer program is stored in the memory. When the computer program is run by a processor, the processor can perform the method for positioning a vehicle according to embodiments of the present disclosure.

As shown in FIG. 6, the memory may further store an operating system, and the memory and the processor may be connected to each other through a system bus. It should be appreciated that FIG. 6 only schematically illustrates terminal equipment including a memory and a processor, however, embodiments of the present disclosure are not limited thereto, and the terminal equipment may further include a network interface, an input device, and the like.

It could be understood by those skilled in the art that all or part of the processes in the methods of the above embodiments may be implemented by a computer program instructing relevant hardware. The computer program may be stored in a computer-readable storage medium and may be executed by at least one processor in a computer system to implement a process including the method of the above embodiments. The storage medium may be a magnetic disk, an optical disk, a Read-Only Memory (ROM), a Random Access Memory (RAM), or the like.

The technical features of the above embodiments may be arbitrarily combined, and for brevity, not all possible combinations of the technical features of the above embodiments are described, but should be considered as within the scope of the present disclosure as long as there is no collision in the combination of the technical features.

The above embodiments only disclose several implementations of the present disclosure, and the description thereof is specific and detailed, but not to be understood as limiting the scope of the present disclosure. It should be noted that those skilled in the art may make various modifications and controls without departing from the spirit of the present disclosure, and all these modifications and controls are within the scope of the present disclosure. Therefore, the protection scope of the present disclosure should be subject to the appended claims.

## Claims

1. A method for positioning a vehicle, comprising:
acquiring positioning information sent by at least one peripheral device after receiving a positioning instruction;
selecting a peripheral device meeting a preset condition to serve as a positioning reference according to the positioning information; and
acquiring positioning information of a location of the vehicle based on a wireless signal relationship between the vehicle and the peripheral device serving as the positioning reference.

2. The method according to claim 1, wherein the step of acquiring positioning information sent by the at least one peripheral device comprises:
acquiring positioning information sent by at least one peripheral Internet of Vehicles device.

3. The method according to claim 2, wherein the preset condition comprises at least one of:
the Internet of Vehicles device is a Road Side Unit (RSU) fixed device;
the Internet of Vehicles device is an Internet of Vehicles device on-board device;
a positioning accuracy of the Internet of Vehicles device reaches a preset accuracy threshold;
the vehicle is within a direction angle of the Internet of Vehicles device; and
the Internet of Vehicles device is in a static state.

4. The method according to claim 1, wherein after the step of acquiring positioning information of a location of the vehicle from a wireless signal relationship between the vehicle and the peripheral device serving as the positioning reference, the method further comprises:
continuously acquiring positioning information of a new location of the vehicle based on the positioning information of the location of the vehicle and map information until the location of the vehicle is positioned as a target position.

5. The method according to claim 4, wherein after the step of continuously acquiring positioning information of a new location of the vehicle based on the positioning information of the location of the vehicle and map information until the location of the vehicle is positioned as a target position, the method further comprises:
externally broadcasting the positioning information of the location of the vehicle.

6. A device for positioning a vehicle, comprising:
a first acquisition module configured to acquire positioning information sent by at least one peripheral device after receiving a positioning instruction;
a selection module configured to select a peripheral device meeting a preset condition as a positioning reference according to the positioning information; and
a second acquisition module configured to acquire positioning information of a location of the vehicle according to a wireless signal relationship between the vehicle and the peripheral device serving as the positioning reference.

7. The device of claim 6, wherein the first acquisition module is further configured to:
acquire positioning information sent by at least one peripheral Internet of Vehicles device.

8. The device according to claim 7, wherein the preset condition comprises at least one of:
the Internet of Vehicles device is a Road Side Unit (RSU) fixed device;
the Internet of Vehicles device is an Internet of Vehicles device on-board device;
a positioning accuracy of the Internet of Vehicles device reaches a preset accuracy threshold;
the vehicle is within a direction angle of the Internet of Vehicles device; and
the Internet of Vehicles device is in a static state.

9. The device of claim 6, wherein the second acquisition module is further configured to:
continuously acquire positioning information of a new location of the vehicle based on the positioning information of the location of the vehicle and map information until the location of the vehicle is positioned as a target position.

10. The device of claim 9, further comprising a broadcast module configured to externally broadcast the positioning information of the location of the vehicle.

11. A terminal equipment, comprising a memory in which a computer program is stored and a processor which, when running the computer program, performs the method according to any one of claims 1 to 5.

12. A storage medium having stored thereon a computer program which, when executed by a processor, causes the processor to perform the method of any one of claims 1 to 5.
